# EUROPÄISCHE PATENTSCHRIFT

(11) **EP 2 410 189 B1**
(45) Veröffentlichungstag und Bekanntmachung des Hinweises auf die Patenterteilung: **06.07.2016**
(21) Anmeldenummer: 11003965.8
(22) Anmeldetag: 13.05.2011
(51) Int. Cl.: F16B 5/06, F16B 21/06, F16B 21/07

(54) **Dekompressionsverschluss mit Schraubverbindung zum Zusammenhalten von Bauteilen**
Decompression lock with screw connection for holding components together
Fermeture de décompression dotée d'une liaison à vis pour maintenir ensemble des composants

(30) Priorität: 22.07.2010 DE 202010010488 U
(43) Veröffentlichungstag der Anmeldung: 25.01.2012
(73) Patentinhaber: S-Fasteners GmbH, 75382 Althengstett (DE)
(72) Erfinder: Homner, Bernhard, 75365 Calw-Stammheim (DE); Svyrsky, Dimitri, 75177 Pforzheim (DE)
(74) Vertreter: Blutke, Klaus Wilhelm

(56) Entgegenhaltungen:
- DE-A1- 3 511 070
- US-A- 2 416 873
- US-A- 3 988 808

## Beschreibung

Dekompressionsverschlüsse haben die Aufgabe, bei Überdruck zu öffnen und dabei Bauteile wie Platten aus einer Halteposition freizugeben. Bei der Öffnung des Dekompressionsverschlusses wird üblicherweise die Haltekraft einer Feder überwunden.

Aus der US 3 988 808 A (POE L RICHARD ET AL, 2.Nov 1976, Die genannten Referenzzahlen beziehen sich auf diese US Patentschrift) ist ein Dekompressionsverschluß zur Verbindung von Bauteilen 2,13 mit aufeinander ausgerichteten Öffnungen 3,14 bekannt, der bei Überschreiten eines vorbestimmten Drucks öffnet. Der Dekompressionsverschluß umfasst eine haltebolzen-ähnliche Anordnung 11, 12 axialer Ausrichtung mit einem Bolzenkopf 5 und eine lösbare, zwei Komponenten 12,20 umfassende Verriegelungsanordnung, wobei die haltebolzen-ähnliche Anordnung 11,12 bis zu ihrem am oberen Bauteil 2 anliegenden Bolzenkopf 5 durch die Öffnungen 3, 14 der Bauteile 2,13 hindurchführbar ist,
wobei das am unteren Bauteil 13 herausstehende Ende der der haltebolzen-ähnlichen Anordnung 11, 12 als die erste Komponente der Verriegelungsanordnung ausgebildet ist,
und wobei die zweite Komponente der Verriegelungsanordnung mit dem unteren Bauteil 13 verbindbar ist,
wobei die Bauteile 2, 13 zwischen dem Bolzenkopf 5 und der Verriegelungsanordnung anordnungsbar sind,
wobei das über dem unteren Bauteil herausstehende Ende der haltebolzen-ähnlichen Anordnung 11, 12 mindestens eine Aussparung zwischen 11 und 12 aufweist für einen eine Halteposition definierenden Eingriff eines federkraftbeaufschlagten Halteelementes 20 der zweiten Komponente der Verriegelungsanordnung,
wobei die Aussparung und das Halteelement 20 derart ausgebildet sind, dass beim Auftreten eines vorbestimmten Drucks auf der Seite des unteren Bauteils 13 die haltebolzen-ähnliche Anordnung 11, 12 unter Lösung der Halteposition axial in Richtung des Bolzenkopfes 5 verschiebbar ist, wobei zum Lösen der Halteposition das federkraftbeaufschlagte Halteelement 20 entgegen der Federkraft aus der Aussparung herausdrückbar ist.
Der in diesem US Patent gezeigte Dekompressionsverschluß erscheint im Vergleich zu dem in der vorliegenden Anmeldung gezeigten Dekompressionsverschluß auf dem Kopf stehend dargestellt, d.h., die Begriffe "oben" und "unten" sind vertauscht.

Aus der DE 35 11 070 A1 (Schwarz Verbindungs Systeme), offengelegt 3. Okt. 1985, ist eine Vorrichtung zum lösbaren Verbinden zweier mit fluchtenden Öffnungen versehener Bauteile beschrieben. Dabei wird ein Schließbolzen mit Spreizkeilflächen und seitlichen Einkerbungen durch Öffnungen in den vorzugsweise plattenförmigen Bauteilen hindurchgesteckt, wobei Federzungen eines am zweiten Bauteil befestigten Halteteils radial in die Einkerbungen verriegelnd eingreifen. In einer zentralen Bohrung des Schließbolzens ist ein Entriegelungsbolzen längsbeweglich jedoch unverdrehbar geführt, dessen diametral angeordnete keilförmige Spreizflächen bei axialem Verschieben des Schließbolzens die Federzungen zum Lösen der Verbindung spreizen.

Im US Patent 2 416 873 (Gorfin Alex M.) vom 4. März 1947 ist eine lösbare Verbindungsanordnung für übereinander liegende Bauteile beschrieben. Sie umfasst einen Haltebolzen mit einem Kopf und einen Schaft mit Innengewinde, eine modifizierte Mutter in Form eines Zapfens mit Außengewinde und eine zwei Komponenten umfassende Verriegelungsanordnung.
Das aus den Bauteilen herausstehende Ende des Zapfens ist als erste Komponente der Verriegelungsanordnung mit Aussparungen (zur Aufnahme von Feder-Arm-Enden) ausgebildet. Die zweite Komponente der Verriegelungsanordnung ist als Feder-Arm-Anordnung am aussparungsnahen Bauteile gestaltet.
Die Bauteile sind zwischen dem Kopf des Haltebolzens und der Verriegelungsanordnung angeordnet. Die Schraubverbindung zwischen Haltebolzen und Zapfen gestattet eine Anpassung der Verbindungsanordnung an Bauteile unterschiedlicher Dicke.

Es ist Aufgabe der Erfindung, die bekannten Anordnungen zum Verbinden von Bauteilen mit einem Dekompressionsverschluß durch eine neuartige technische Konstruktion des Dekompressionsverschlusses zu bereichern.

Diese Aufgabe der Erfindung wird durch die im kennzeichnenden Teil des Anspruchs 1 angegebenen Merkmale gelöst. Vorteilhafte Weiterbildungen sind den Unteransprüchen zu entnehmen.

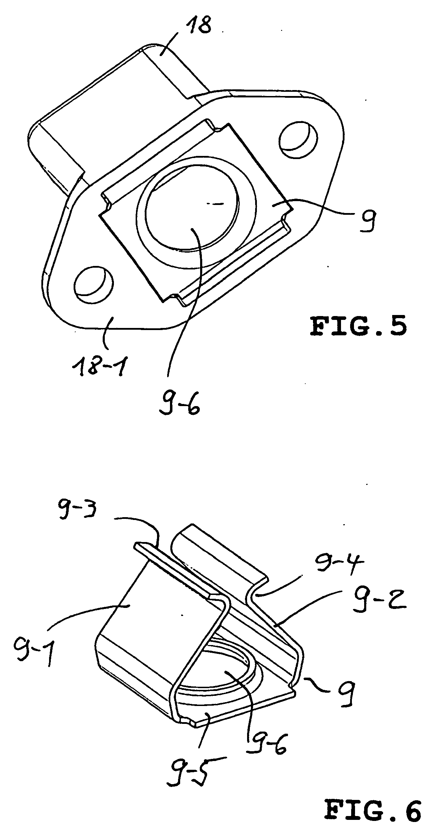

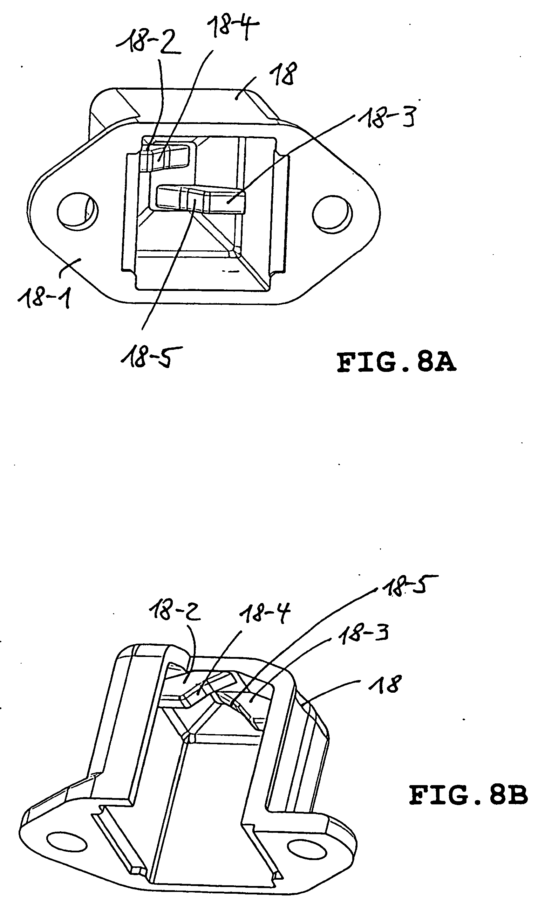

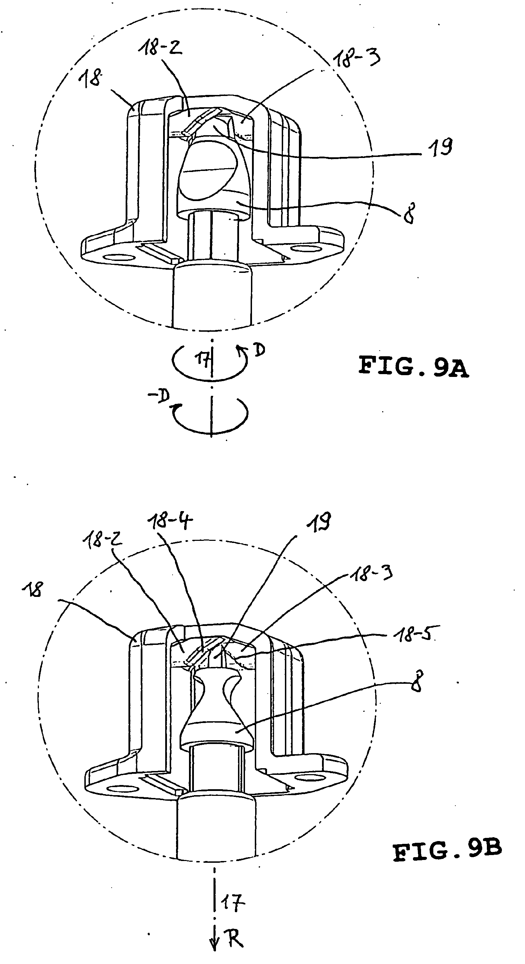

Ein Ausführungsbeispiel der Erfindung ist in den Zeichnungen dargestellt und wird im folgenden näher beschrieben. Es zeigen:
FIG.1
   eine Schnittdarstellung des erfindungsgemäßen Dekompressionsverschlusses in Halte-Position;
FIG.2A
   eine Schnitt-Darstellung des Dekompressionsverschlusses (ohne Hülse mit Spiralfeder) für eine Position, in welcher die haltebolzenähnliche Anordnung noch nicht vollends in die Haltefeder-Anordnung eingeschoben ist;
FIG.2B
   eine Schnitt-Darstellung des Dekompressionsverschlusses (ohne Hülse mit Spiralfeder) für eine Position, in welcher die haltebolzen-ähnliche Anordnung vollends in die Haltefeder-Anordnung eingeschoben ist;
FIG. 3
   eine isometrische Darstellung des zweiteiligen Halte-Bolzens (ohne Hülse mit Spiralfeder), bestehend aus einem Außengewindeschaft mit Bolzenkopf und aus einem Innengewindeschaft mit Verriegelungskopf;
FIG. 4A
   Eine isometrische Darstellung der haltebolzen-ähnlichen Anordnung mit aufgebrochen dargestellter Hülse;
FIG.4B
   eine Seitenansicht der haltebolzen-ähnlichen Anordnung;
FIG.4C
   eine Ansicht der haltebolzen-ähnlichen Anordnung mit Blick auf die Verbindung des Außen- mit dem Innengewindeschaft;
FIG. 4D
   eine isometrische Teilansicht der Dreh-Sperre;
FIG.5
   eine isometrische Darstellung eines die Halteblatt-Feder-Anordnung umgebenden Gehäuses mit Blickrichtung auf die Unterseite des Gehäuses;
FIG.6
   eine isometrische Darstellung der Halteblatt-Feder-Anordnung;
FIG.7A
   eine isometrische Darstellung des Verriegelungskopfes mit Nase;
FIG.7B
   eine Aufsicht auf die Breitseite der Nase;
FIG.8A
   eine isometrische Darstellung des Gehäuses gemäß FIG.5 (ohne eingeführte Halteblatt-Feder-Anordnung) mit blick auf die Nasen-Aufnahme-Anordnung an der Gehäuse-Decke;
FIG.8B
   eine isometrische Darstellung des aufgebrochenen Gehäuses gemäß FIG.8A mit Blick auf die Nasen-Aufnahme-Anordnung;
FIG.9A
   eine isometrische Darstellung des aufgebrochenen Gehäuses mit Blick auf Verriegelungskopf in einer Anschlagstellung seiner Nase für die Halteposition (ohne Darstellung der Halte-Blattfeder-Anordnung);
FIG.9B
   eine isometrische Darstellung des aufgebrochenen Gehäuses mit Blick auf Verriegelungskopf in einer anderen Anschlagstellung seiner Nase als in FIG.9A. Diese andere Anschlagstellung bezieht sich auf eine verdrehte Position des Verriegelungskopfes, in welcher dieser nicht mehr die Halteposition einnimmt;
FIG.10
   eine Schnittdarstellung des Gehäuses mit der Nase in einer Drehposition zwischen zwei Wand-Elementen in der Nasen-Aufnahme-Anordnung.

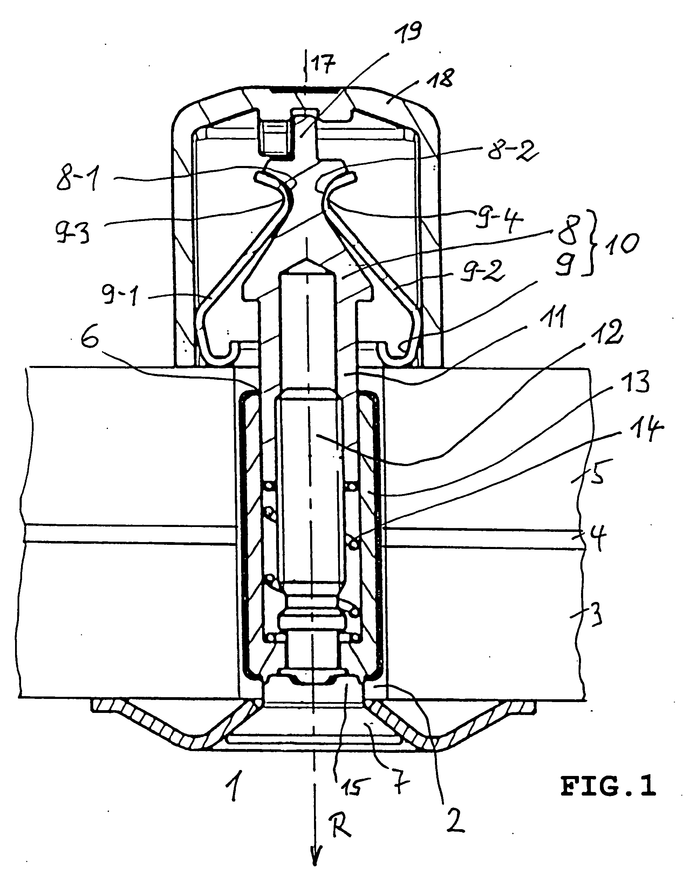

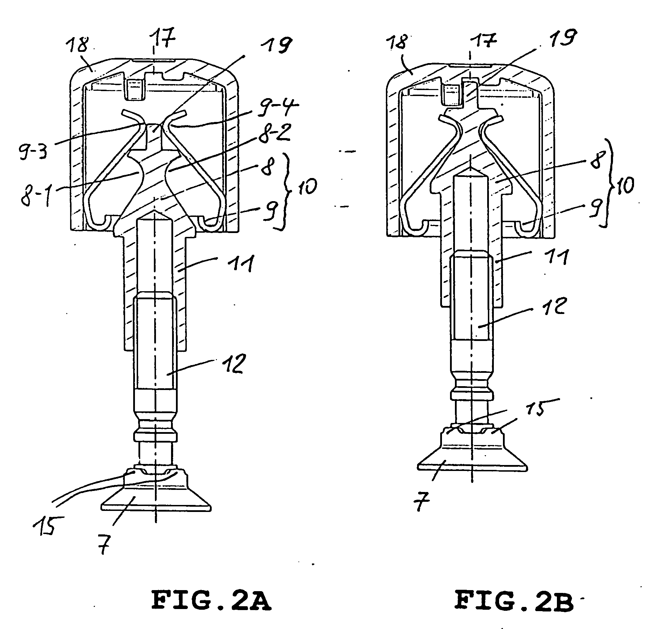

FIG.1 zeigt
eine Schnittdarstellung des erfindungsgemäßen Dekompressionsverschlusses 1 in Halte-Position (VerriegelungsPosition).
Der Dekompressionsverschluss 1 dient der Verbindung von Bauteilen 3, 4, 5 mit aufeinander ausgerichteten Öffnungen 2. Er öffnet beim Überschreiten eines vorbestimmten Drucks auf der Seite des oberen Bauteils 5. Der Dekompressionsverschluss 1 umfaßt eine haltebolzen-ähnliche Anordnung 6 mit einem Bolzenkopf 7 und eine lösbare, zwei Komponenten 8, 9 umfassende Verriegelungsanordnung 10 (FIG.2A, FIG.2B). Die haltebolzen-ähnliche Anordnung 6 ist bis zu ihrem am unteren Bauteil 3 anliegenden Bolzenkopf 7 durch die Öffnungen 2 der Bauteile 3, 4, 5 hindurchführbar. Das am oberen Bauteil 5 herausstehende Ende der haltebolzen-ähnlichen Anordnung 6 ist als die erste Komponente 8 der Verriegelungsanordnung 10 ausgebildet. Sie wird im Ausführungsbeispiel der Erfindung als Verriegelungskopf 8 bezeichnet. Die Verriegelungsanordnung 10 ist mit dem oberen Bauteil 5 verbunden. Die Bauteile 3, 4, 5 sind zwischen dem Bolzenkopf 7 und der Verriegelungsanordnung 10 angeordnet.

Der Verriegelungskopf 8 der haltebolzen-ähnlichen Anordnung 6 weist zwei diametral angeordnete Aussparungen 8-1, 8-2 für den Eingriff von federkraftbeaufschlagten Halte-Elementen der zweiten Verriegelungsanordnungs-Komponente 9 auf.
Die zweite Verriegelungsanordnungs-Komponente 9 ist im Ausführungsbeispiel der Erfindung eine Halte-Blattfeder-Anordnung 9. Ihr Basisteil 9-5 (FIG.6) weist eine Öffnung 9-6 zum Hindurchführen des oberen Teils der haltebolzen-ähnlichen Anordnung 6 mit dem Verriegelungskopf 8 auf. Vom Rand des Basisteils 9-5 gehen zwei schräg nach oben und innen geneigte sich gegenüberstehende Blattfederarme 9-1, 9-2 aus, deren freie Enden 9-3, 9-4 gerundet nach außen gebogen sind. Sie stehen sich in geringem Abstand gegenüber.
In der Halteposition (Verriegelungsposition) des Dekompressionsverschlusses greifen die Blattfeder-Arm-Enden 9-3, 9-4 in die Aussparungen 8-1, 8-2 des Verriegelungskopfes 8 ein.
Die Aussparungen 8-1, 8-2 und die Blattfeder-Arme 9-1, 9-2 mit ihren Enden 9-3 und 9-4 sind derart ausgebildet, dass beim Auftreten eines vorbestimmten Drucks auf der Seite des oberen Bauteils 5 die haltebolzen-ähnliche Anordnung 6 unter Lösung der Halteposition axial 17 in Richtung R des Bolzenkopfes 7 verschoben wird. Dabei werden die Blattfeder-Arm-Enden 9-3, 9-4 aus den Aussparungen 8-1, 8-2 herausgedrückt.
Die erste Verriegelungsanordnungs-Komponente und die federkraftbeaufschlagten Halteelemente können auch anders als im Ausführungsbeispiel gezeigt, gestaltet sein.
Die erste Verriegelungsanordnungs-Komponente kann z.B. auch ein Veriegelungskopf mit nur einer (z.B. einer ringförmigen) Aussparung oder mit mehr als zwei Aussparungen sein zum Eingriff entsprechender federkraft-beaufschlagter Halte-Elemente. Die Halte-Elemente können z.B. auch durch federkraftbeaufschlagte Halte-Stifte realisiert werden.

Die haltebolzen-ähnliche Anordnung 6 umfaßt den Schaft 12 mit dem Bolzenkopf 7 und den Schaft 11 mit dem Verriegelungskopf 8. Beide Schäfte 12, 11 sind miteinander gewindeverbindbar. Der mit dem Bolzenkopf 7 verbundene Schaft 12 hat ein Außengewinde, der mit dem Verriegelungskopf 8 verbundene Schaft 11 ein Innengewinde.
Durch entsprechende Drehung des Bolzenkopfes 7 kann die Schraubverbindung festgezogen (bzw. gelöst) werden.

Die Halte-Blattfeder-Anordnung 9 ist in einem Gehäuse 18 drehfest ( bezüglich der gedachten Achse 17 der haltebolzenähnlichen Anordnung 6) angeordnet. Das Gehäuse 18 ist fest mit dem oberen Bauteil 5 verbindbar, z.B. durch eine Schraubverbindung (FIG.5).

FIG.2A zeigt
eine Schnitt-Darstellung des Dekompressionsverschlusses 1 ( ohne Hülse mit Spiralfeder) für eine Position, in welcher die haltebolzen-ähnliche Anordnung 6 noch nicht vollends in die Haltefeder-Anordnung 9 eingeschoben ist.

FIG.2B zeigt
eine Schnitt-Darstellung des Dekompressionsverschlusses (ohne Hülse mit Spiralfeder) für eine Position, in welcher die haltebolzen-ähnliche Anordnung 6 vollends in die Haltefeder-Anordnung 9 eingeschoben ist.

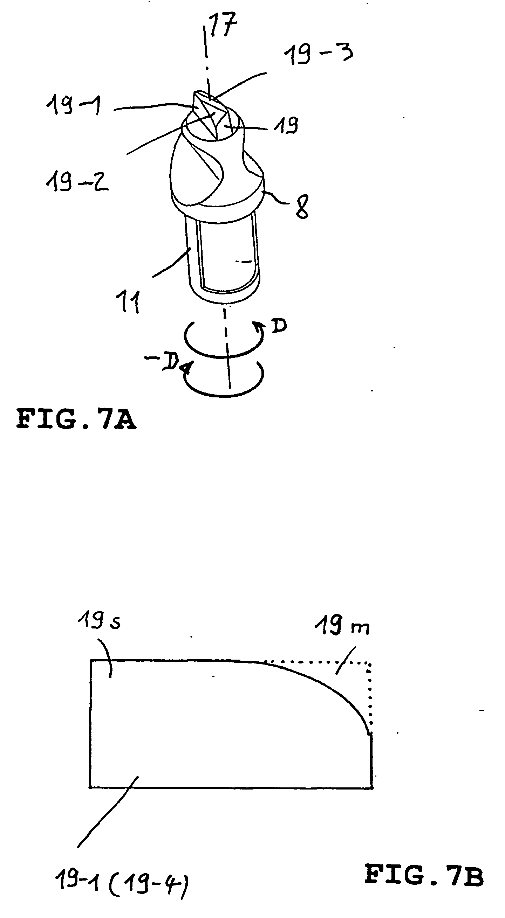

Auf dem Verriegelungskopf 8 der haltebolzen-ähnlichen Anordnung 6 ist eine Nase 19 angeordnet.
Beim Hineindrücken der haltebolzen-änlichen Anordnung 6 in die Halte-Blattfeder-Anordnung 9 gelangt zunächst die Nase 19 in den Bereich zwischen die beiden etwas beabstandeten Blattfeder-Arm-Enden 9-3, 9-4.
Die Nase 19 ist so gestaltet, dass sie (und damit auch der Verriegelungskopf 8) beim Passieren der Blattfeder-Arm-Enden 9-3, 9-4 ausgerichtet bzw. bezüglich der Achse 17 in eine bestimmte Position gedreht wird. In dieser Position drücken die Halte-Blattfederarm-Enden 9-3, 9-4 auf die Breitseiten (FIG.7B) der Nase 19.
Nach weiterem Hineindrücken der haltebolzen-ähnlichen Anordnung 6 in die Halte-Blattfeder-Anordnung 9 greifen die Blattfeder-Arm-Enden 9-3, 9-4 in die Aussparungen 8-1, 8-2 des Verriegelungskopfes 8 ein (Halteposition).

In dieser Halteposition nimmt die Nase 19 in der Nasen-Aufnahme-Anordnung 18-2 / 18-3 an der Decke des Gehäuses eine bestimmte Stellung ein (FIG.9A). In dieser Stellung ist eine Verdrehung der Nase bzw. des Verriegelungskopfes je nach Drehrichtung des Bolzenkopfes 7 anschlagsbedingt nicht möglich oder auf einen bestimmten Drehwinkel begrenzt.

Beim Festziehen der Gewindeverbindung der Schäfte 11, 12 durch Drehung des Bolzenkopfes 7 in Richtung D (FIG.9A ist eine Verdrehung des Verriegelungskopfes 8 -wie später noch erläutert- nicht möglch.

Beim manuell gewollten Lösen der Halteposition (nicht zu verwechseln mit dem selbsttätigen Öffnen des Dekompressionsverschlusses durch auftretenden Überdruck) wird der Bozenkopf 7 in Richtung -D gedreht. Für diesen Fall soll sich der Verriegelungskopf 8 noch um einen bestimmten Winkelbereich (im Ausführungsbeispiel der Erfindung ca 90 Grad) in Richtung -D drehen können. Nach einer solchen Drehung greifen die Blattfeder-Arm-Enden nicht mehr in die Aussparungen 8-1 und 8-2 ein. Weitere Einzelheiten werden in Zusammenhang mit den FIG. 9A und 9B erläutert.

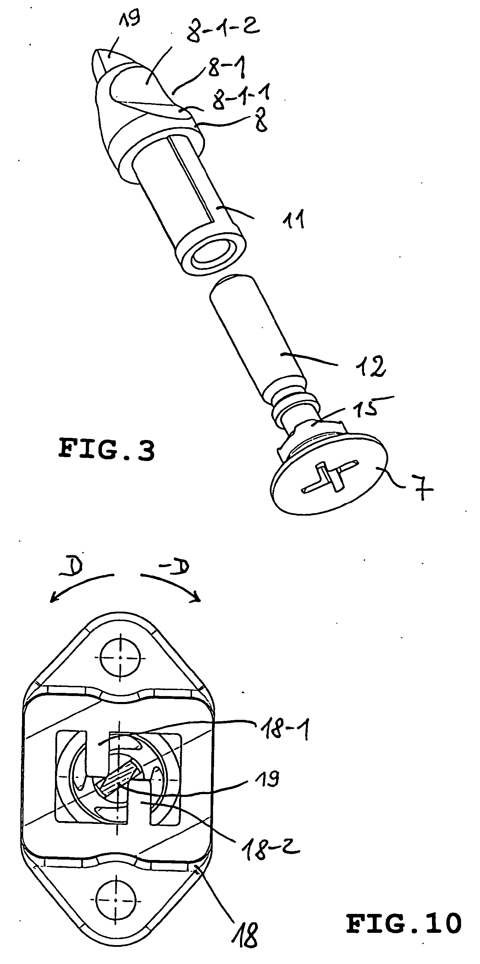

FIG.3 zeigt
eine isometrische Darstellung des zweiteiligen Haltebolzens (ohne Hülse mit Spiralfeder), bestehend aus dem Außengewindeschaft 12 mit Bolzenkopf und aus dem Innengewindeschaft 11 mit Verriegelungskopf 8. Beide Schäfte 11, 12 sind durch entsprechende Drehung des
Bolzenkopfes 7 gewindeverbindbar.
Die Aussparungen 8-1 und 8-2 (in FIG.3 verdeckt) weisen in Achsrichtung verlaufende Schrägen auf. Die obere Schräge 8-1-2 der Aussparung 8-1 erleichtert dem Halte-Blattfader-Arm-Ende das Hineingleiten in die bzw. das Herausgleiten aus der Aussparung. Die untere Schräge dient der Anpassung an die Form des Halte-Blattfeder-Arms.

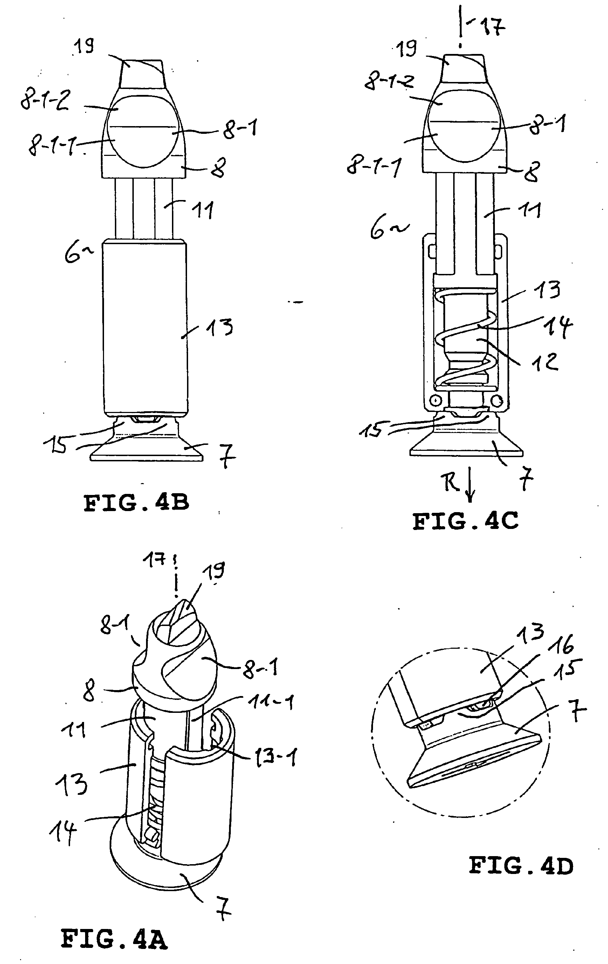

Im Zusammenhang mit den FI.4A, 4B, 4C und FIG.4D werden Einzelheiten zu einer die Schäfte 11, 12 umgebenden Hülse und zu einer Drehsperre für die Gewindeverbindung beider Schäfte 11, 12 erläutert.

FIG.4A zeigt
eine isometrische Darstellung der haltebolzen-ähnlichen Anordnung 6 mit aufgebrochen dargestellter Hülse.

FIG.4B zeigt
eine Seitenansicht der haltebolzen-ähnlichen Anordnung 6.

FIG.4C zeigt
eine Ansicht der haltebolzen-ähnlichen Anordnung mit Blick auf die Verbindung des Außen- mit dem Innengewinde-Schaft.

FIG.4D zeigt
eine isometrische Teilansicht der Dreh-Sperre 15/16.

Die Hülse (13) umschließt beide Schäfte 11 und 12.
Der drehbare Schaft 11 ist in der Hülse 13 derart nutengeführt (11-1 / 13-1), dass die Hülse (13) nur in Richtung der Achse 17 verschiebbar ist.
In der Hülse 13 (siehe auch FIG.4C) ist eine Druckspiralfeder 14 derart angeordnet, dass der untere Hülsenrand in Richtung R auf den Innenrand des Bolzenkopfes 7 gedrückt wird.
Der untere Hülsenrand und der Innenrand des Bolzenkopfes sind - wie nachfolgend erläutert- als Dreh-Sperre für die Gewindeverbindung der Schäfte 11, 12 ausgebildet.

Am unteren Hülsen(13)rand und am Innenrand des Bolzenkopfes 7 sind konzentrisch voneinander beabstandete Rastelemente 16, 15 angeordnet. In Rastposition greift ein Rastelement 16 bzw. 15 in den Zwischenraum zwischen zwei gegenüberstehende Rastelementen 15 bzw. 16 ein (FIG.4D).
Bei Verdrehung des Bolzenkopfes 7 beaufschlagen die Gleitschrägen der Rastelemente 15 auf dem Innenrand des Bolzenkopfes 7 derart die Gleitschrägen der Rastelemente 16 auf der Hülsenunterseite , dass die Hülse 13 gegen die Kraft der Spiraldruckfeder 14 vorübergehend aus der Rastposition gedrückt wird. Nach Vollendung eines Drehschrittes nehmen die Rastelemente 16 am unteren Hülsenrand und die (15) am I nnerand des Bolzenkopfes 7 eine neue feder(14)kraftbeaufschlagte Rastposition ein.

Die in der Hülse 13 angeordnete Druck-Spiralfeder 14 (FIG.4C) stützt sich am Ende des Schaftes 11 ab und drückt auf den inneren Absatz der Hülse. Dadurch wird der untere Hülsenrand in Richtung R auf den Innenrand des Bolzenkopfes 7 gedrückt. Durch den Federdruck werden die Rastelemente 15, 16 in ihrer Rastposition gehalten.

Die beabstandeten konzentrisch auf der Unterseite der Hülse 13 angeordneten Rastelemenete 16 greifen
feder(14)kraftbeaufschlagt in die Anstände zwischen den beabstandeten konzentrisch auf den Innenrand des Bolzenkopfes 7 angeordneten Rastelementen 15 ein. Zugleich greifen aber auch die Rastelemente 15 am Innenrand des Bolzenkopfes 7 in die Abstände zwischen den Rastelementen 16 an der Unterseite der Hülse 13 ein

FIG.5 zeigt
eine isometrische Darstellung eines die Haltefeder-Anordnung 9 umgebenden Gehäuses 18 mit Blickrichtung auf die Unterseite 18-1 des Gehäuses 18.

FIG.6 zeigt
Eine isometrische Darstellung der Halte-Blattfeder-Anordnung 9. Die Halteblattfeder-Anordnung 9 hat ein Basisteil 9-5 mit einer Öffnung 9-6, die ein Hindurchführen des oberen Teils der haltebolzen-ähnlichen Anordnung 6 mit dem Verriegelungskopf 8 gestattet. Vom Rand des Basisteils 9-5 gehen zwei schräg nach oben und innen geneigte sich gegenüberstehende Blattfederarme 9-1, 9-2 aus, deren freie Enden 9-3, 9-4 gerundet nach außen gebogen sind. Diese freien Enden stehen sich mit geringem Abstand einander gegenüber. In der Halteposition greifen diese Blattfeder-Arm-Enden 9-3, 9-4 in die diametral am Verriegelungskopf angeordneten Aussparungen 8-1, 8-2 ein.

Das Basisteil 9-5 der Halte-Blattfeder-Anordnung (9) hat eine eckige Form. Es (9-5) wird formschlüssig in eine entsprechende Aussparung des Gehäuses eingesetzt, so dass die Halte-Blattfeder-Anordnung 8 in dem Gehäuse 18 drehfest bezüglich der Achse 17 angeordnet ist. Das Gehäuse ist fest mit dem oberen Bauteil 5 verbindbar, z.B. mittels einer Schraub- oder Nietverbindung (nicht dargestellt).

FIG.7A zeigt
eine isometrische Darstellung des Verriegelungskopfes 8 mit der Nase 19. Der Schaft 11, der Verriegelungskopf 8 und die Nase 19 sind um die Achse 17 der haltebolzen-ähnlichen Anordnung 6 drehbar.
Die Nase 19 hat eine quader-ähnliche Gestalt. Sie ist derart am Verriegelungskopf 8 angeordnet, dass ihre gedachte Mittellinie mit der Achse 17 der haltebolzen-ähnlichen Anordnung übereinstimmt. Diese Mittellinie sei so definiert, dass sie in gedachter Schnittdarstellung der Nase senkrecht zur Achse 17 von den Quaderkanten den gleichen Abstand hat.
Die Nase 19 ist an ihrem freien Ende an zwei diametral liegenden Eckbereichen 19-2 und 19-3 gemäß FIG.7A abgeschrägt. Die vordere Breitseite 19-1 der Nase 19 weist eine obere linke Ecke 19s und einen oberen abgeschrägten rechten (fehlenden) Eckbereich 19m auf.
Analog hierzu hat die hintere (in FIG.7A nicht einsehbare) Breitseite - in FIG.7B mit 19-4 bezeichnet- ebenfalls wie die Breitseite 19-1- eine obere linke Ecke 19s und einen oberen angeschrägten rechten (fehlenden) Eckbereich 19m.
Diesen Bereichen 19s und 19m kommt eine unterschiedliche Funktion zu, je nachdem, ob sich der Verriegelungskopf 8 in Richtung D oder in Richtung -D drehen soll.

FIG. 7B zeigt
eine Aufsicht auf die Breitseite 19-1 (bzw. 19-4) der Nase 19. Die Breitseite hat einen oberen linken Eckbereich 19s und einen oberen abgeschrägten (fehlenden) rechten Eckbereich 19m. Der obere linke Eckbereich 19s und der obere fehlende abgeschrägte Eckbereich 19m spielen eine Rolle bei der Drehbegrenzung der Nase 19, nachdem diese in die Nasen-Aufnahme-Anordnung 18-2 und 18-3 des Gehäuses 18 eingeführt wurde.
Ausgehend von der Halteposition sind zwei verschiedene
Möglichkeiten für eine Drehbewegung des Bolzenkopfes zu unterscheiden (FIG.7A):
eine Drehbewegung in Richtung D (sie entspricht der Drehbewegung des Bolzenkopfes zum Festziehen der Gewindeverbindung der Schäfte 11 und 12, und eine Drehbewegung in Richtung -D zum Lösen der Halteposition durch Montage.

FIG. 8A zeigt
eine isometrische Darstellung des Gehäuses 18 gemäß FIG.5 (ohne eingeführte Halte-Blattfeder-Anordnung) mit Blick auf die Nasen-Aufnahme-Anordnung 18-2, 18-3 an der Gehäuse-Decke.

FIG.8B zeigt
eine isometrische Darstellung des aufgebrochenen Gehäuses 18 gemäß FIG.8A mit einer anderen Blickrichtung auf die Nasen-Aufnahme-Anordnung 18-2, 18-3.

Die Nasen-Aufnahme-Anordnung umfasst zwei gegenseitig versetzte Wand-Elemente 18-2 und 18-3. Die Ebenen der einander zugewandten Innenseiten dieser Wand-Elemente haben einen Abstand, der die Anordnung der Nase mit der Nasenstärke d (= Abstand ihrer Breitseiten) zwischen diesen Ebenen gestattet.

FIG.9A zeigt
eine isometrische Darstellung des aufgebrochenen Gehäuses 18 mit Blick auf den Verriegelungskopf 8 in einer Anschlagstellung seiner Nase 19 für die Halteposition (ohne Darstellung der Haltefeder-Anordnung).

FIG.9B zeigt
eine isometrische Darstellung des aufgebrochenen Gehäuses 18 mit Blich auf Verriegelungskopf 8 in einer anderen Drehposition seiner Nase 19 als in FIG.9A. In dieser Drehposition befindet sich der Verriegelungskopf 8 nicht mehr in Halteposition (in welcher die Blattfeder-Arm-Enden in die Aussparungen eingreifen).
In der Nasen-Aufnahme-Anordnung ist eine Verdrehung der Nase 19 in Richtung D (in dieser Drehrichtung wird durch den Bolzenkopf 7 die Gewindeverbindung zwischen den Schäften 11 und 12 festgezogen) nicht möglich, weil der obere linke Eckbereich 19s der Breitseite 19-1 (19-4) der Nase gegen die Innenseite der Wand-Elemente 18-2 (18-3) anschlägt (FIG.9A).

Eine Verdrehung der Nase 19 in Richtung -D (in dieser Drehrichtung wird durch den Bolzenkopf 7 die Gewindeverbindung zwischen den Schäften 11 und 12 gelöst) für einen bestimmten Drehwinkel ist möglich, weil die Nase im Bereich der fehlenden abgeschrägten Eckbereiche 19-2, 19-3 unter der Schräge 18-4 (18-5) des Wand-Elementes 18-2 (18-3) noch ein Sück gedreht werden kann
bis die Nase auf die Schrägen trifft und bei weiterer Drehung in Drehrichtung -D an diesen Schrägen entlang gleitet, wobei die mit der Nase 19 verbundene haltebolzen-ähnliche Anordnung 6 in Richtung R ausweicht.

Der Drehwinkel hängt von den Abmessungen des abgeschrägten Eckbereiches und vom Verlauf der Schräge ab.
Für das Ausführungsbeispiel der Erfindung beträgt er ca. 90 Grad.
Nach einer Drehung um 90 Grad greifen bei diametraler Anordnung der Aussparungen 8-1 und 8-2 die Halte-Blattfeder-Arm-Enden nicht mehr in diese Aussparungen ein. Sie liegen hingegen auf der glatten Oberfläche des konischen Verriegelungskopfes 8 ( dieser verjüngt sich zur Nase hin) auf und üben auf ihn eine Kraft aus. Dabei wirkt eine Kraftkomponente in Richtung R, so dass der Verriegelungskopf und damit auch die haltebolzen-ähnliche Anordnung 6 in Richtung R verschoben und aus der Öffnung 2 gedrückt wird. Dies erleichtert die Entnahme der haltebolzen-ähnlichen Anordnung 6.

FIG.10 zeigt
eine Schnittdarstellung des Gehäuses 18 mit der Nase 19 in einer Drehposition zwischen den Wand-Elementen 18-1 und 18-2 der Nasen-Aufnahme-Anordnung. Aus dieser Darstellung ist ersichtlich, dass sich die Nase in Richtung D nur soweit drehen kann, bis es zu einem Anschlag der oberen Eckbereiche 19s der Breitseiten der Nase mit dem Wand-Element 18-1 bzw. 18-2 kommt.

Bei einer Drehrichtung -D kann jedoch - wie bereits erwähntdie Nase um einen bestimmten Winkelbereich verdreht werden, da der fehlende Eckbereich 19-2, 19-3 unter den Schrägen 18-4, 18-5 der Wand-Elemente 18-2, 18-3 (FIG.8A, FIG.8B, FIG.9B) ein entsprechendes Stück vorbeibewegt werden kann.

## Patentansprüche

1. Anordnung zum Verbinden von Bauteilen (3,4,5), bestehend aus einem Dekompressionsverschluß (1) Und aus Bauteilen mit aufeinander ausgerichteten Öffnungen (2),
wobei der Dekompressionsverschluß bei Überschreiten eines vorbestimmten Drucks öffnet,
wobei der Dekompressionsverschluß eine haltebolzenähnliche Anordnung (6) axialer (17) Ausrichtung mit einem Bolzenkopf (7) und eine lösbare, zwei Komponenten (8,9) umfassende Verriegelungsanordnung (10) umfasst,
wobei die haltebolzen-ähnliche Anordnung (6) bis zum Bolzenkopf (7) durch die Öffnungen (2) der Bauteile (3,4,5) hindurchführbar ist,
wobei das am bolzenkopf(7)fernen Bauteil(5) herausstehende Ende der haltebolzen-ähnlichen Anordnung (6) als die erste Komponente (8) der Verriegelungsanordnung (10) ausgebildet ist,
und wobei die zweite Komponente (9) der Verriegelungsanordnung (10) mit dem bolzenkopf(7)fernen Bauteil (5) verbindbar ist,
wobei die Bauteile (3,4,5) zwischen dem Bolzenkopf (7) und der Verriegelungsanordnung (10) anordnungsbar sind, wobei das über dem bolzenkopf(7)fernen Bauteil(5) herausstehende Ende der haltebolzen-ähnlichen Anordnung (6) mindestens eine Aussparung (8-1, 8-2) aufweist für einen eine Halteposition definierenden Eingriff eines federkraft-beaufschlagten Halteelementes (9-3, 9-4) der zweiten Komponente (9) der Verriegelungsanordnung (10), wobei die Aussparung (8-1, 8-2) und das Halteelement (9-3, 9-4) derart ausgebildet sind, dass beim Auftreten eines vorbestimmten Drucks auf der Seite des bolzenkopf(7)-fernen Bauteils (5) die haltebolzen-ähnliche Anordnung (6) unter Lösung der Halteposition axial (17) in Richtung (R) des Bolzenkopfes (7) verschiebbar ist, wobei zum Lösen der Halteposition das federkraftbeaufschlagte Halteelement (9-3, 9-4) entgegen der Federkraft aus der Aussparung (8-1, 8-2) herausdrückbar ist,
**dadurch gekennzeichnet,**
**dass** die zweite Verriegelungsanordnungs-Komponente (9) in einem Gehäuse (18) drehfest bezüglich der gedachten Achse (17) der haltebolzenähnlichen Anordnung (6) angeordnet ist und dass das Gehäuse (18) fest mit dem bolzenkopf (7) fernen Bauteil (5) verbindbar ist und
**daß** die haltebolzen-ähnliche Anordnung (6) einen Schaft (12) mit Bolzenkopf (7) und
einen Schaft (11) mit der ersten Verriegelungsanordnungs-Komponente (8) umfasst, wobei beide Schäfte (11, 12) miteinander gewindeverbindbar sind

2. Anordnung nach Anspruch 1,
**dadurch gekennzeichnet,**
**dass** die zweite Verriegelungsanordnungs-Komponente eine Halte-Blattfeder-Anordnung (9) ist,
welche ein Basisteil (9-5) mit einer Öffnung (9-6) aufweist zum Hindurchführen des oberen Teils der haltebolzen-ähnlichen Anordnung (6) mit der ersten Verriegelungsanordnungs-Komponente (8),dass vom Rand des Basisteils (9-5) zwei schräg nach oben und innen geneigte sich gegenüberstehende Blattfeder-Arme (9-1, 9-2) ausgehen, deren freie Enden (9-3, 9-4) gerundet nach außen gebogen sind,
und **dass** die erste Verriegelungsanordnungs-Komponente (8) zwei diametral angeordnete Aussparungen (8-1 8-2) für den Eingriff der Blattfederarm-Enden (9-3, 9-4) aufweist,
**dass** auf der ersten Verriegelungsanordnungskomponente (8) der haltebolzen-ähnlichen Anordnung (6) eine Nase(19) angeordnet ist,
**dass** beim Einführen dieser Nase (19) in den Bereich zwischen die beiden Blattfederarm-Enden (9-3, 9-4) die haltebolzen-ähnliche Anordnung (6) in eine Drehposition bezüglich ihrer Achse (17) ausrichtbar ist, in welcher nach weiterem Eindrücken der haltebolzen-ähnlichen Anordnung (6) in die Halte-Blattfeder-Anordnung (9) die Blattfeder-Arm-Enden (9-3, 9-4) in die Aussparungen (8-1, 8-2) der ersten Verriegelungsanordnungs-Komponente (8) eingreifen
und **dass** in der Halteposition, d.h. beim Eingriff der Blattfederarm-Enden (9-3, 9-4) in die Aussparungen (8-1, 8-2), die Nase (19) in eine Nasen-Aufnahme-Anordnung (18-2/ 18-3) des Gehäuses (18) anordnungsbar ist, welche anschlagsbedingt eine Verdrehung der haltebolzen-ähnlichen Anordnung (6) beim Festziehen der Gewindeverbindung der Schäfte (11, 12) durch Drehung des Bolzenkopfes (7) nicht zulässt.

3. Anordnung nach Anspruch 2,
**dadurch gekennzeichnet, dass**
in der Halteposition, d.h. beim Eingriff der Blattfederarm-Enden (9-3, 9-4) in die Aussparungen (8-1, 8-2), die Nase (19) von einer Nasen-Aufnahme-Anordnung (18-2/ 18-3) des Gehäuses (18) aufnehmbar ist,
welche (18-2, 18-3) anschlagsbedingt eine Verdrehung der haltebolzen-ähnlichen Anordnung (6) in Drehrichtung des Bolzenkopfes (7) beim Lösen der Gewindeverbindung zwischen den Schäften (11, 12) für einen Winkelbereich zulässt, wobei am Ende dieses Winkelbereiches die Blattfederarm-Enden (9-3, 9-4) nicht mehr in die Aussparungen (8-1, 8-2) eingreifen.

4. Anordnung nach Anspruch 1,
**dadurch gekennzeichnet,**
**dass** die haltebolzen-ähnliche Anordnung (6) eine die Schäfte (11,12) umschließende Hülse (13) umfasst, wobei die Hülse (13) am Schaft (11) nutengeführt (11-1, 13-1) in Richtung R axial und entgegengesetzt dazu verschiebbar ist.

5. Anordnung nach Anspruch 4,
**dadurch gekennzeichnet,**
**dass** in der Hülse (13) eine Spiraldruckfeder (14) derart angeordnet ist, dass der untere Hülsenrand auf dem Innenrand des Bolzenkopfes (7) gedrückt wird und
**dass** der untere Hülsenrand und der Innenrand des Bolzenkopfes (7) als Drehsperre (15,16) für die Gewindeverbindung der Schäfte (11,12) ausgebildet ist

6. Anordnung nach Anspruch 5,
**dadurch gekennzeichnet, dass**
am unteren Hülsenrand und auf dem Innenrand des Bolzenkopfes (7) konzentrisch angeordnete voneinander beanstabdete Rastelemente (16, 15) angeordnet sind, dass in Rastposition der Drehsperre ein Rastelement (16 bzw. 15) in den Zwischenraum zwischen zwei gegenüberstehende Rastelemente (15 bzw. 16) eingreift und dass bei Verdrehung des Bolzenkopfes (7) die Rastelemente (15) auf dem Innenrand des Bolzenkopfes (7) derart die Rastelemente (16) auf der Hülsenunterseite beaufschlagen, daß die Hülse (13) gegen die Kraft der Spiraldruckfeder (14) vorübergehend aus der Rastposition gedrückt wird, bis nach Vollendung eines Drehschrittes die Rastlemente (16) am unteren Hülsenrand und die (15) auf dem Innenrand des Bolzenkopfes (7) eine neue feder(14)kraftbeaufschlagte Rastposition einnehmen.

7. Anordnung nach einem der Ansprüche 2 bis 6,
**dadurch gekennzeichnet, dass**
dass die Nase (19) eine quaderähnliche Gestalt hat und so am Verriegelungskopf (8) angeordnet ist, dass die gedachte Mittellinie der Nase (19) mit der Achse (17) übereinstimmt,
wobei die Mittellinie in gedachter Schnittebene der Nase senkrecht zur Achse (17) von den Quaderkanten den gleichen Abstand hat,
dass die Nase (19) an ihrem freien Ende an zwei diametral liegenden Eckbereichen (19-2, 19-3) abgeschrägt ist, dass die Breitseiten (19-1, 19-4) der Nase (19) je einen oberen Eckbereich (19s) und einen oberen abgeschrägten fehlenden Eckbereich (19m) aufweisen,
dass die Nasen-Aufnahme-Anordnung im Gehäuse (18) zwei gegenseitig versetzte Wand-Elemente (18-2, 18-3) mit Randschrägen (18-4, 18-5) umfasst,
dass zwischen den Ebenen der einander zugewandten Innenseiten dieser Wandelemente die Nase (19) derart angeordnet ist, dass eine Drehung der Nase in eine Drehrichtung D dadurch begrenzt ist, dass der obere Eckbereich (19s) jeder Breitseite (19-1, 19-4) der Nase (19) an die Wandelemente (18-2, 18-3) anschlägt,
dass bei einer Drehung der Nase in die entgegengesetzte Drehrichtung -D um einen Winkelbereich die abgeschrägten fehlenden Eckbereiche (19-2, 19-3) der Nase (19) unter den Schrägen (18-4, 18-5) der Wandelemente (18-2, 18-3) vorbeibewegbar sind
bis die Nase auf die Schrägen trifft und bei weiterer Drehung in Drehrichtung -D an diesen Schrägen entlang gleitet, wobei die mit der Nase (19) verbundene haltebolzen-ähnliche Anordnung )6) in Richtung R ausweicht.

## Claims

1. Arrangement for connecting components (3, 4, 5) comprising a decompression seal (1) and components with openings (2) which are aligned with one another, where the decompression seal opens when a previously defined pressure is exceeded, where the decompression seal (1) comprises a retaining-bolt-like arrangement (6) aligned axially (17) with a bolt head (7) and a releasable locking arrangement (10) comprising two elements (8, 9), where the retaining-bolt-like arrangement (6) can be pushed up to the bolt-head through the openings (2) in the components (3, 4, 5),
where the projecting end of the retaining-bolt-like arrangement (6) on the component (5) most distant from the bolt head (7) is formed as the first element (8) in the locking arrangement (10) and where the second element (9) of the locking arrangement (10) can be connected to the component (5) most distant from the bolt head (7),
where the components (3,4,5) between the bolt head (7) and the locking arrangement (10) can be arranged,
where the projecting end of the retaining-bolt-like arrangement (6) projecting over the component (5) most distant from the bolt head (7) has at least one recess (8-1, 8-2) for the engagement of a spring-loaded retaining element (9-3, 9-4) of the second element (9) of the locking arrangement (10) which defines one retaining position,
where the recess (8-1, 8-2) and the retaining element (9-3, 9-4) are formed in such a way that when a certain pre-defined pressure is applied to the side of the component (5) most distant from the bolt head (7), the retaining-bolt-like arrangement (6) is pushed axially (17) in the direction (R) of the bolt head (7), thereby releasing the retaining position, where, in order to release the retaining position, the spring-loaded retaining element (9-3, 9-4) can be pressed out of the recess (8-1, 8-2) against the force of the spring, **characterised in,**
**that** the second element (9) of the locking arrangement is located in a housing (18) torque-proof with reference to the imaginary axis (17) of the retaining-bolt-like arrangement (6) and that the housing (18) is permanently attached to the component (5) most distant from the bolt head (7), and that the retaining-bolt-like arrangement (6) comprises a shaft (12) with bolt head (7) and a shaft (11) with the first element (8) of the locking arrangement where both shafts (11, 12) can be joined to one-another by a screw thread.

2. Arrangement in accordance with claim 1 **characterised in that** the second element of the locking arrangement is a retaining leaf-spring arrangement (9) which has a base part (9-5) with an opening (9-6) through which the upper part of the retaining-bolt-like arrangement (6) with the first component (8) of the locking arrangement is pushed,
that two leaf-spring arms (9-1, 9-2) located opposite one another extend diagonally upwards and inwards from the edge of the base part (9-5), whose free ends (9-3, 9-4) are rounded and curve outwards, and that the first element (8) of the locking arrangement has two diametrically arranged recesses (8-1, 8-2) with which the ends of the leaf-spring arms (9-3, 9-4) engage,
that a tappet (19) is arranged on the first component (8) of the locking arrangement of the retaining-bolt-like arrangement (6),
that when the tappet (19) is inserted into the area between the two ends (9-3, 9-4) of the leaf spring, the retaining-bolt-like arrangement (6) can be aligned to a rotating position with reference to its axis (17) in which, when the retaining-bolt-like arrangement (6) is pressed further into the retaining leaf-spring arrangement (9), the ends (9-3, 9-4) of the leaf spring engage in the recesses (8-1, 8-2) of the first element (8) of the locking arrangement,
and that in the retaining position, i.e. when the ends (9-3, 9-4) of the leaf spring are engaged in the recesses (8-1, 8-2), the tappet (19) can be arranged in a tappet-seat arrangement (18-2 / 18-3) of the housing (18) which, by means of a stop, prevents the retaining-bolt-like arrangement (6) from turning when the threaded connection of the shafts (11, 12) is tightened by turning the bolt head (7).

3. Arrangement in accordance with claim 2 **characterised in that**, in the retaining position, i.e. when the ends (9-3, 9-4) of the leaf spring are engaged in the recesses (8-1, 8-2), the tappet (19) can be received in a tappet-seat arrangement (18-2 / 18-3) of the housing (18) which, by means of a stop, permits the retaining-bolt-like arrangement (6) to turn for an angular range in the direction of rotation of the bolt head (7) when the threaded connection between the shafts (11, 12) is loosened, whereby, at the end of this angular range, the ends (9-3, 9-4) of the leaf spring no longer engage in the recesses (8-1, 8-2).

4. Arrangement in accordance with claim 1 **characterised in that** the retaining-bolt-like arrangement (6) comprises a sleeve (13) embracing the shafts (11, 12), where the sleeve (13) is guided on the shaft (11) by a groove (11-1, 13-1) and can be moved axially in direction R and in the opposite direction.

5. Arrangement in accordance with claim 4 **characterised in that** a spiral pressure spring (14) is arranged in the sleeve (13) in such a way that the lower edge of the sleeve is pressed against the inner edge of the bolt head (7) and that the lower edge of the sleeve and the inner edge of the bolt head (7) are formed as a turning lock (15, 16) for the threaded connection of the shafts (11, 12).

6. Arrangement in accordance with claim 5 **characterised in that** concentrically arranged engaging elements (16, 15) are arranged at a distance from one another on the lower edge of the sleeve and the inner edge of the bolt head (7),
that in the engaged position of the turning lock, one engaging element (16 or 15) engages into the space between two opposing engaging elements (16 or 15), and
that when the bolt head (7) is turned, the engaging elements (15) on the inner edge of the bolt head (7), act on the engaging elements (16) on the lower edge of the sleeve in such a way that the sleeve (13) is pressed against the force of the spiral pressure spring (14) temporarily out of the engaged position until, after completion of a turning operation, the engaging elements (16) on the lower edge of the sleeve and those (15) on the inner edge of the bolt head (7), assume a new spring (14) -pressurised engaged position.

7. Arrangement in accordance with any of the claims 2 to 6 **characterised in**
**that** the tappet (19) is square-shaped and is arranged on the locking head (8) in such a way that the imaginary centre line of the tappet (19) corresponds to the axis (17),
where the centre line in the imaginary cutting plane of the tappet perpendicular to the axis (17) lies at an equal distance from the edges of the square,
**that** the tappet (19) is bevelled at its free end at two diametrically opposed corner areas (19-2, 19-3), that the broad sides (19-1, 19-4) of the tappet (19) each have an upper corner area (19s) and an upper bevelled missing corner area (19m),
**that** the tappet-seat arrangement in the housing (18) comprises two mutually offset wall elements (18-2, 18-3) with bevelled edges (18-4, 18-5),
**that** the tappet (19) is arranged between the planes of the facing insides of these wall elements in such a way that the turning of the tappet (19) in direction D is limited by the fact that the upper corner area (19s) of each broad side (19-1, 19-4) of the tappet (19) strikes against the wall elements (18-2, 18-3),
**that** when the tappet (19) is turned in the opposite direction -D by an angular range, the bevelled missing corner areas (19-2, 19-3) of the tappet (19) can pass beneath the bevels (18-4, 18-5) of the wall elements (18-2, 18-3), until the tappet (19) meets the bevels and, when moved further, slides along these bevels in direction -D, causing the retaining-bolt-like arrangement (6) joined to the tappet (19) to deflect in direction R.

## Revendications

1. Disposition pour assembler des pièces (3, 4, 5), composée d'une fermeture à décompression (1) et de pièces avec des ouvertures (2) orientées l'une vers l'autre,
dans laquelle la fermeture à décompression s'ouvre lorsqu'une pression prédéterminée est dépassée,
dans laquelle la fermeture à décompression comprend une disposition semblable à un boulon de maintien (6) d'orientation axiale (17) avec une tête de boulon (7) et une disposition de verrouillage (10) pouvant être défaite et comprenant deux pièces (8, 9), dans laquelle la disposition semblable à un boulon de maintien (6) peut être passée à travers les ouvertures (2) des pièces (3, 4, 5) jusqu'à la tête de boulon (7),
dans laquelle l'extrémité de la disposition semblable à un boulon de maintien (6) dépassant au niveau de la pièce (5) éloignée de la tête de boulon (7) est conformée comme le premier composant (8) de la disposition de verrouillage (10),
et dans laquelle le deuxième composant (9) de la disposition de verrouillage (10) peut être assemblé avec la pièce (5) éloignée de la tête de boulon (7),
dans laquelle les pièces (3, 4, 5) peuvent être disposées entre la tête de boulon (7) et la disposition de verrouillage (10), l'extrémité de la disposition semblable à un boulon de maintien (6) qui dépasse au-delà de la pièce (5) éloignée de la tête de boulon (7) présentant au moins une découpe (8-1, 8-2) pour la mise en prise définissant une position de maintien d'un élément de maintien (9-3, 9-4) du deuxième composant (9) de la disposition de verrouillage (10) soumis à la force d'un ressort,
la découpe (8-1, 8-2) et l'élément de maintien (9-3, 9-4) étant conformés de telle manière que lorsqu'une pression prédéterminée s'exerce du côté de pièce (5) éloignée de la tête de boulon (7), la disposition semblable à un boulon de maintien (6) peut être déplacée dans le sens axial (17) dans la direction (R) de la tête de boulon (7) en abolissant la position de maintien, l'élément de maintien (9-3, 9-4) soumis à la force d'un ressort pouvant être éjecté de la découpe (8-1, 8-2) contre la force du ressort afin d'abolir la position de maintien,
**caractérisée en ce que** le deuxième composant (9) de la disposition de verrouillage est disposé dans un boîtier (18) de manière fixe en rotation par rapport à l'axe imaginaire (17) de la disposition semblable à un boulon de maintien (6) et
**en ce que** le boîtier (18) peut être fixé à la pièce (5) éloignée de la tête de boulon (7) et
**en ce que**
la disposition semblable à un boulon de maintien (6) comprend une tige (12) avec la tête de boulon (7) et une tige (11) avec le premier composant de la disposition de verrouillages (8), les deux tiges (11, 12) pouvant être vissées l'une à l'autre.

2. Disposition selon la revendication 1, **caractérisée en ce que** le deuxième composant de la disposition de verrouillage est une disposition de ressort à lames de maintien (9) qui comprend une partie de base (9-5) avec une ouverture (9-6) pour faire passer la partie supérieure de la disposition semblable à un boulon de maintien (6) avec le premier composant de la disposition de verrouillage (8), deux bras de ressort à lames (9-1, 9-2) qui se font face et dont les extrémités libres (9-3, 9-4) sont courbées vers l'extérieur partant en oblique vers le haut et vers l'intérieur,
et **en ce que** le premier composant de la disposition de verrouillage (8) présente deux découpes (8-1 8-2) diamétralement opposées pour la mise en prise des extrémités (9-3, 9-4) des bras de ressort à lames,
**en ce qu'**un ergot (19) est disposé sur le premier composant de la disposition de verrouillage (8) de la disposition semblable à un boulon de maintien (6),
**en ce que** lors de l'insertion de cet ergot (19) dans la zone située entre les deux extrémités des bras de ressort à lames (9-3, 9-4), la disposition semblable à un boulon de maintien (6) peut être orientée dans une position de rotation par rapport à son axe (17) dans laquelle, quand la disposition semblable à un boulon de maintien (6) est encore enfoncée dans la disposition de ressort à lames de maintien (9), les extrémités (9-3, 9-4) des bras de ressort à lames se mettent en prise dans les découpes (8-1, 8-2) du premier composant de la disposition de verrouillage (8),
et **en ce que** dans la position de maintien, c'est-à-dire quand les extrémités des bras de ressort à lames (9-3, 9-4) sont en prise dans les découpes (8-1, 8-2), l'ergot (19) peut être disposé dans une disposition de réceptacle pour l'ergot (18-2/18-3) du boîtier (18) qui forme une butée empêchant une rotation de la disposition semblable à un boulon de maintien (6) lors du serrage de l'assemblage vissé des tiges (11, 12) par la rotation de la tête de boulon (7).

3. Disposition selon la revendication 2, **caractérisée en ce que** dans la position de maintien, c'est-à-dire quand les extrémités des bras de ressort à lames (9-3, 9-4) sont en prise dans les découpes (8-1, 8-2), l'ergot (19) peut être reçu par une disposition de réceptacle pour l'ergot (18-2/18-3) du boîtier (18), laquelle (18-2, 18-3) autorise grâce à une butée une rotation de la disposition semblable à un boulon de maintien (6) dans le sens de rotation de la tête de boulon (7) lors du desserrage de l'assemblage vissé entre les tiges (11, 12) sur une plage angulaire, les extrémités des bras de ressort à lames (9-3, 9-4) ne se mettant plus en prise dans les découpes (8-1, 8-2) à la fin de cette plage angulaire.

4. Disposition selon la revendication 1, **caractérisée en ce que** la disposition semblable à un boulon de maintien (6) comprend une douille (13) qui entoure une des tiges (11, 12), la douille pouvant coulisser sur la tige (11) en étant guidée dans une gorge (11-1, 13-1) dans la direction axiale R et dans la direction opposée.

5. Disposition selon la revendication 4, **caractérisée en ce que** la douille (13) contient un ressort hélicoïdal de compression (14) disposé de telle manière que la paroi inférieure de la douille est appuyée sur le bord intérieur de la tête de boulon (7) et que le bord inférieur de la douille et le bord intérieur de la tête de boulon (7) sont conformés comme un blocage en rotation (15, 16) pour l'assemblage vissé des tiges (11, 12).

6. Disposition selon la revendication 5, **caractérisée en ce qu'**il est prévu sur le bord inférieur de la douille et le bord intérieur de la tête de boulon (7) des éléments d'enclenchement (16, 15) disposés de façon concentrique et écartés les uns des autres,
**en ce que** dans la position d'enclenchement du blocage en rotation, un élément d'enclenchement (16 ou 15) se met en prise dans l'espace entre deux éléments d'enclenchement (15 ou 16) qui se font face et en ce quand la tête de boulon (7) est tournée, les éléments d'enclenchement (15) sur le bord intérieur de la tête de boulon (7) agissent sur les éléments d'enclenchement (16) sur la face inférieure de la douille de telle façon que la douille (13) est poussée contre la force du ressort hélicoïdal de compression (14) pour quitter temporairement la position d'enclenchement, jusqu'à ce qu'une étape de rotation des éléments d'enclenchement (16) sur le bord inférieur de la douille soit terminée et que les éléments d'enclenchement (15) aient pris une nouvelle position d'enclenchement contrainte par ressort (14) sur le bord intérieur de la tête de boulon (7).

7. Disposition selon l'une des revendications 2 à 6, **caractérisée en ce que** l'ergot (19) a une forme quadrangulaire et est disposé sur la tête de verrouillage (8) de telle manière que la ligne médiane imaginaire de l'ergot (19) coïncide avec l'axe (17),
la ligne médiane se trouvant à la même distance des arêtes du carré dans le plan de coupe imaginaire de l'ergot perpendiculaire à l'axe (17),
**en ce que** l'ergot (19) est biseauté à son extrémité libre sur deux zones de coin (19-2, 19-3) diamétralement opposées, **en ce que** les côtés larges (19-1, 19-4) de l'ergot (19) présentent chacun une zone de coin supérieur (19s) et une zone de coin supérieur biseauté manquant (19m),
**en ce que** la disposition de réceptacle pour l'ergot dans le boîtier (18) comprend deux éléments de paroi (18-2, 18-3) décalés l'un par rapport à l'autre avec des biseaux sur le bord (18-4, 18-5),
**en ce que** l'ergot (19) est disposé entre les plans des faces inférieures tournées l'une vers l'autre de ces éléments de paroi de telle sorte qu'une rotation de l'ergot dans un sens de rotation D est limité par le fait que la zone de coin supérieur (19s) de chaque côté large (19-1, 19-4) de l'ergot (19) bute sur les éléments de paroi (18-2, 18-3),
**en ce que** lors d'une rotation de l'ergot dans le sens de rotation opposé -D sur une plage d'angle, les zones de coin biseautés manquants (19-2, 19-3) de l'ergot (19) peuvent passer sous les biseaux (18-4, 18-5) des éléments de paroi (18-2, 18-3) jusqu'à ce que l'ergot atteigne les biseaux et, lorsque la rotation se poursuit dans le sens de rotation -D, glisse le long de ces biseaux, la disposition semblable à un boulon de maintien (6) reliée à l'ergot (19) s'écartant alors dans la direction R.
